# EUROPEAN PATENT APPLICATION

(11) **EP 3 795 974 A1**
(43) Date of publication of application: **24.03.2021**
(21) Application number: 20189562.0
(22) Date of filing: 05.08.2020
(51) Int. Cl.: G01M 3/28

(54) **MARINE HOSE FLUID LEAKAGE DETECTION SYSTEM**

(30) Priority: 20.09.2019 JP 2019171079
(71) Applicant: THE YOKOHAMA RUBBER CO., LTD., Tokyo 105-8685 (JP)
(72) Inventor: ISHIBASHI, Yusuke, Kanagawa, 2548601 (JP)
(74) Representative: Grünecker Patent- und Rechtsanwälte PartG mbB

(57) **Abstract**

Object:

Provided is a marine hose fluid leakage detection system that more reliably detects fluid leakage of a marine hose and reduces the work of confirming fluid leakage without the need to monitor battery life.

Solution:

When a fluid L flowing through a flow path 1a flows into the fluid retention layer 7 interposed between an inner peripheral side reinforcing layer 4 and an outer peripheral side reinforcing layer 5, the pressure P in a pressure holding chamber 20b of a casing 18 increases through a communication pipe 10 and a check valve 17, the pressure P is held by the check valve 17 and detected by a pressure sensor unit 15, a radio wave transmitter 21a arranged outside a marine hose 1a transmits a transmission radio wave W1 and a passive IC tag 12 transmits a return radio wave W2 in accordance with the transmission radio wave W1, a radio wave receiver 21b receives detected pressure data detected by the pressure sensor unit 15 and transmitted by the return radio wave W2, and whether there is leakage of the fluid L is determined based on the received detected pressure data.

## Description

### Technical Field

The present invention relates to a marine hose fluid leakage detection system, and particularly relates to a marine hose fluid leakage detection system that does not need to monitor battery life and can reliably detect fluid leakage of a marine hose and reduce the work of confirming fluid leakage.

### Background Art

In marine hoses, by providing a fluid retention layer between reinforcement layers, leaked transport fluid can be temporarily stored in the fluid retention layer to prevent leakage to the outside of the hose. In order to detect transport fluid that has leaked to the fluid retention layer, a fluid leakage detector is known in which, for example, an oil pod is used (see Patent Document 1). In this fluid leakage detector, when the transport fluid leaks into the fluid retention layer, the fluid enters the oil pod through a communication pipe, and a detecting body housed inside the oil pod is deformed or becomes wet with the transport fluid. Therefore, whether fluid leakage has occurred may be known by visually confirming through a window portion of the oil pod the presence or absence or the like of deformation of the detecting body.

However, accurate visual confirmation from the outside of the state (degree of change) of the detecting body housed inside the oil pod is difficult. In a case where barnacles, or marine growth such as seaweed or the like adhere to the window portion of the oil pod, visual confirmation becomes even more difficult, and additional work is required to remove them. In addition, there is also a problem in that the work of performing visual confirmation when on the water requires a significant amount of labor.

A detection system has also been proposed in which a change in air pressure inside the fluid retention layer is detected by a pressure sensor via a communication pipe, and a detection signal from this pressure sensor is transmitted to a receiver outside the marine hose (see Patent Document 2). In this detection system, a battery for transmitting the detection signal must be installed on the hose side, and the battery life of the battery must be constantly monitored. The detected air pressure also changes depending on the movement of the marine hose, so it is necessary to increase the frequency of transmitting the detection signal (it is necessary to transmit the detection signal frequently) in order to accurately detect fluid leakage; however, the battery drains faster. On the other hand, reducing the transmission frequency is disadvantageous from the aspect of detecting fluid leakage with high accuracy.

### Citation List

### Patent Literature

Patent Document 1: JP 2010-002045 A
Patent Document 2: JP 2007-177847 A

### Summary of Invention

### Technical Problem

An object of the present invention is to provide a marine hose fluid leakage detection system that is capable of more reliably detecting fluid leakage of a marine hose and reducing the work of confirming fluid leakage without the need to monitor the battery life.

### Solution to Problem

In order to achieve the above object, the marine hose fluid leakage detection system of the present invention, is a marine hose fluid leakage detection system for detecting leakage of fluid flowing through a flow path of a marine hose comprising an inner peripheral side reinforcing layer and an outer peripheral side reinforcing layer laminated on an outer peripheral side of the flow path, a fluid retention layer interposed between the inner peripheral side reinforcing layer and the outer peripheral side reinforcing layer, and a buoyant layer laminated on an outer peripheral side of the fluid retention layer. The marine hose fluid leakage detection system includes a communication pipe communicating with the fluid retention layer and extending to a hose surface, a detector including a casing that is disposed on the hose surface and that communicates with the communication pipe, and a radio wave transmitter and a radio wave receiver arranged outside the marine hose. The detector includes a pressure holding chamber, a check valve that is interposed between the communication pipe and the pressure holding chamber and that allows only a flow from the communication pipe side to the pressure holding chamber side, a pressure sensor unit housed in the pressure holding chamber, and a passive type IC tag connected to the pressure sensor unit. A return radio wave is transmitted from the IC tag in accordance with a transmission radio wave transmitted from the radio wave transmitter. Detected pressure data detected by the pressure sensor unit is transmitted by the return radio wave and received by the radio wave receiver. Whether there is leakage of the fluid is determined based on the detected pressure data received by the radio wave receiver.

### Advantageous Effects of Invention

According to the present invention, when the fluid flowing through the flow passage flows into the fluid retention layer, the pressure in the pressure holding chamber of the casing increases through the communication pipe and the check valve, and this pressure is held by the check valve and detected by the pressure sensor unit. When transmitting a transmission radio wave to the detector from the radio wave transmitter located on the outside of the marine hose during the work of confirming fluid leakage, the passive type IC tag transmits a return radio wave in accordance with the transmission radio wave, and the detected pressure data detected by the pressure sensor unit and transmitted by this return radio wave is received by the radio wave receiver. A passive IC is used, so it is not necessary to monitor the status of the battery life.

Then, as the detected pressure data, the data when the pressure in the pressure holding chamber becomes a maximum is received by the radio wave receiver, so whether there is leakage of fluid may be determined based on this detected pressure data (magnitude of the detected pressure). In a case where water flowing through the flow path leaks into the pressure holding chamber and the IC tag is submerged, the radio wave communication between the radio wave transmitter and the IC tag is cut off, so the detected pressure data that is received by the radio wave receiver becomes zero (the detected pressure data cannot be received). Therefore, it is also possible in this case to determine whether the fluid L is leaking based on the detected pressure data (the magnitude of the detected pressure).

In this way, by using the check valve to maintain the pressure in the pressure holding chamber, and using the detected pressure data that is detected by the pressure sensor unit and received by the radio wave receiver as an index, it becomes possible to more reliably determine whether fluid is leaking from the flow path. Moreover, it is possible to determine whether there is fluid leakage based on this detected pressure data, so there is no need for visual confirmation work on water or the like, and the work of confirming fluid leakage may be reduced.

### Brief Description of Drawings

FIG. 1 is an explanatory diagram illustrating a marine hose in which a marine hose fluid leakage detection system of the present invention is installed.
FIG. 2 is an explanatory diagram illustrating a fluid leakage detection system in a longitudinal cross-sectional view in which a part of the marine hose is enlarged.
FIG. 3 is an explanatory diagram illustrating a longitudinal cross-sectional view of the detector in FIG. 2.
FIG. 4 is an explanatory diagram illustrating a plan view of the detector in FIG. 3.
FIG. 5 is an explanatory diagram illustrating a longitudinal cross-sectional view of the detector in communication with a communication unit.

### Description of Embodiments

Hereinafter, a marine hose fluid leakage detection system of the present invention (hereinafter referred to as a detection system) will be described based on the embodiments illustrated in the drawings.

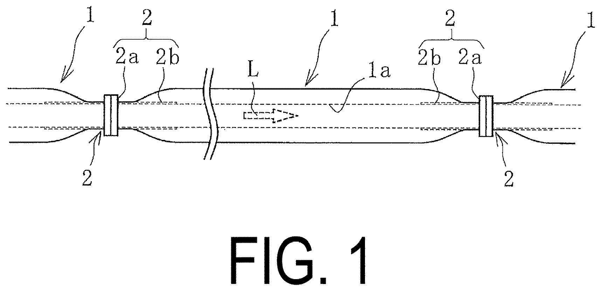

The detection system of the present invention is applied to the floating type marine hose 1 illustrated in FIG. 1. This marine hose 1 is provided with connecting end portions 2 at both ends in the longitudinal direction for connecting to other marine hoses 1. Each connecting end portion 2 includes a nipple 2b extending in the longitudinal direction of the marine hose 1 and a flange 2a joined to one end of the nipple 2b in the longitudinal direction. Generally, no less than 8 and no more than 10 marine hoses 1 are connected and used together.

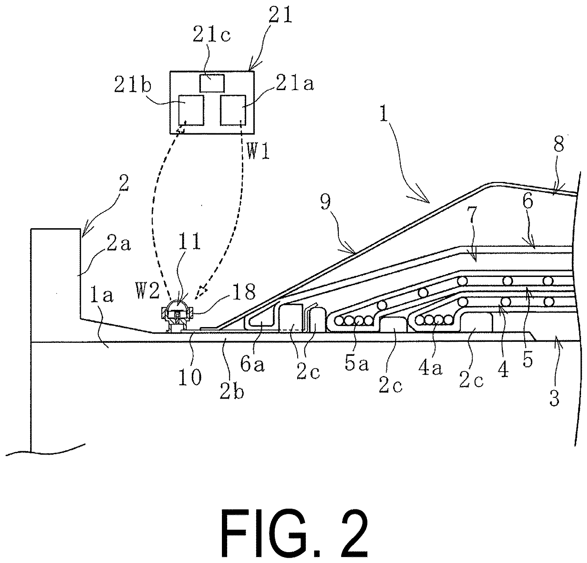

As illustrated in FIG. 2, between the nipples 2b at both ends of the marine hose 1, an inner rubber layer 3, an inner peripheral side reinforcing layer 4, a main body wire layer 5, a fluid retention layer 7, an outer peripheral side reinforcing layer 6, a buoyant layer 8 and an outer covering layer 9 are laminated in this order on the outer peripheral side of the flow path 1a starting from the inner peripheral side of the marine hose 1 and going toward the outer peripheral side. The inner peripheral side of the inner rubber layer 3 serves as the flow path 1a for the fluid L. Examples of the fluid L include crude oil, heavy oil, gasoline, LPG, water, seawater, chemicals (alcohols refined from gasoline), and the like.

The buoyant layer 8 is made of a material such as sponge rubber, polyurethane foam or the like that exhibits buoyancy to float the marine hose 1 above the sea. The outer covering layer 9 is made of a non-water-permeable material such as rubber, and has a line pattern or the like having excellent visibility on the surface thereof.

An appropriate material is selected for the inner rubber layer 3 depending on the type of the fluid L; and in a case where the fluid L is crude oil or the like, the inner rubber layer 3 is made of nitrile rubber or the like having excellent oil resistance. The inner peripheral side reinforcing layer 4 and the outer peripheral side reinforcing layer 6 are each formed by laminating a plurality of reinforcing cord layers in which the reinforcing cords are covered with rubber. The main body wire layer 5 is configured by spirally winding metal wires around the outer peripheral rubber of the inner peripheral side reinforcing layer 4 at predetermined intervals. The inner peripheral side reinforcing layer 4, the main body wire layer 5, and the outer peripheral side reinforcing layer 6 are fixed to the nipple 2b by respective nipple wires 4a, 5a, 6a at one end of each and a fixing ring 2c protruding from the outer peripheral surface of the nipple 2b. The fluid retention layer 7 interposed between the inner peripheral side reinforcing layer 4 and the outer peripheral side reinforcing layer 6 is a space for storing the fluid L that has leaked from the flow path 1a.

As illustrated in FIG. 2, this detection system includes a communication pipe 10 communicating with the fluid retention layer 7 and extending to the surface of the hose, a detector 11 comprising a casing 18 that is connected to the communication pipe 10 and is arranged on the surface of the hose, a radio wave transmitter 21a, and a radio wave receiver 21b. A transmission radio wave W1 is transmitted from the radio wave transmitter 21a to the detector 11, and a return radio wave W2 is transmitted from the detector 11 to the radio wave receiver 21b.

The radio wave transmitter 21a and the radio wave receiver 21b are arranged on the outside of the marine hose 1 separately from the marine hose 1. In this embodiment, a communication unit 21 in which the radio wave transmitter 21a, the radio wave receiver 21b, and the calculation unit 21c are integrated is used, but these units may be separate and independent. A monitor or the like is attached to the communication unit 21.

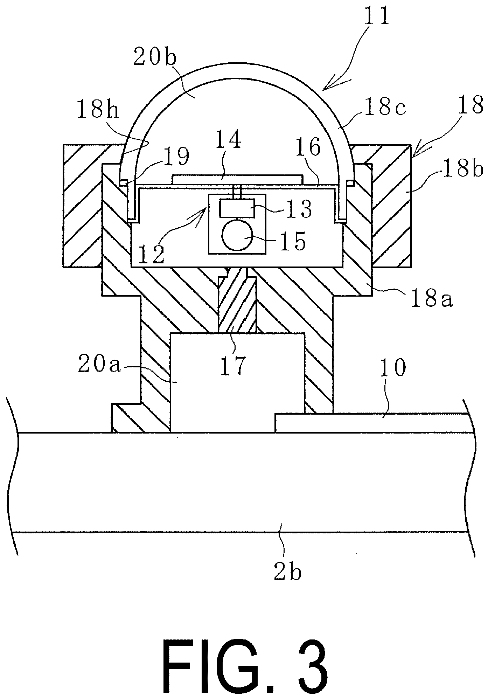

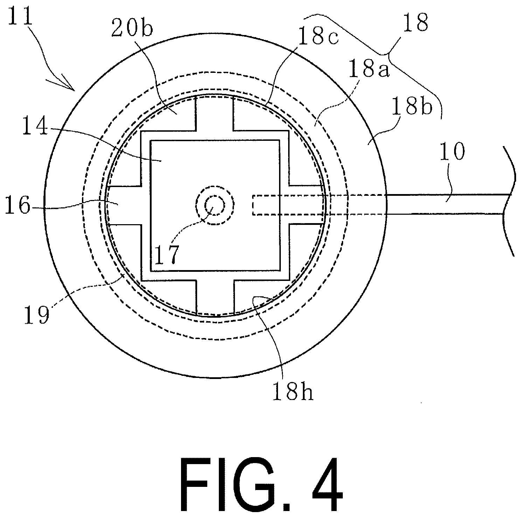

As illustrated in FIG. 3 and FIG. 4, the detector 11 includes a casing 18, a pressure holding chamber 20b, a check valve 17, a pressure sensor unit 15 housed in the pressure holding chamber 20b, and a passive IC tag 12. The casing 18 includes an internal space (introduction chamber 20a and pressure holding chamber 20b) that is airtight and watertight. In this embodiment, the casing 18 includes a metal cylindrical base portion 18a fixed to the surface of the hose (outer peripheral side of the nipple 2b), a metal cylindrical fixed cap portion 18b screwed to the base portion 18a, and a resin radio wave permeating portion 18c.

The fixed cap portion 18b includes a through hole 18h extending vertically through the upper surface, and is screwed to the base portion 18a so as to cover the outer peripheral surface on the upper side of the base portion 18a. The radio wave transmitter 18c is fixed to the base portion 18a by the fixed cap portion 18b screwed to the base portion 18a while being fitted in the through hole 18h. In other words, the radio wave transmitter 18c is fixed in a state of being pressed from above by the fixed cap portion 18b screwed to the base portion 18a.

The radio wave permeating portion 18c has a dome shape (hemispherical shape) protruding upward from the through hole 18h. The radio wave permeating portion 18c is not limited to a dome shape and may be a flat plate shape; however, by using a dome shape, the radio waves W1 and W2 are easily transmitted from all directions in the front, rear, left and right of the radio wave permeating portion 18c, and it is possible to eliminate the directivity of the radio waves W1 and W2 for communication.

The relative dielectric constant of the radio wave permeating portion 18c is set to 5.0 or less in order to easily allow the permeation of the transmission radio wave W1 and the return radio wave W2, and is set to, for example, 2.5 to 3.0. The radio wave permeating portion 18c is made of, for example, polycarbonate, polyamide, or epoxy resin as the material thereof in consideration of durability and impact resistance.

One end opening of the communication pipe 10 is arranged in an introduction chamber 20a formed below the base portion 18a. The pressure holding chamber 20b covered with the radio wave permeating portion 18c is formed on the upper side of the base portion 18a. A seal member 19 such as an O-ring is interposed at the contact portion between the base portion 18a and the radio wave permeating portion 18c, and the airtightness and watertightness of the holding chamber 20b are ensured.

A check valve 17 is installed between the introduction chamber 20a and the pressure holding chamber 20b. The check valve 17 allows only the flow of fluid from the introduction chamber 20a side to the pressure holding chamber 20b side, and restricts (blocks) the flow from the pressure holding chamber 20b side to the introduction chamber 20a side. In other words, the check valve 17 interposed between the communication pipe 10 and the pressure holding chamber 20b allows only the flow of fluid from the communication pipe 10 side to the pressure holding chamber 20 side, and restricts the flow from the pressure holding chamber 20 side. Therefore, when the pressure P of the pressure holding chamber 20b rises, the pressure state is maintained.

An IC tag 12 includes an IC chip 13 and an antenna unit 14 connected to the IC chip 13. The IC chip 13 has a very small size, for example, a vertical dimension and a horizontal dimension of 30 mm or less (corresponding to an outer diameter of 30 mm or less) and a thickness of 5 mm or less. The size of the antenna unit 14 is also very small, for example, the vertical dimension and the horizontal dimension are each 50 mm or less (corresponding to an outer diameter of 50 mm or less) and the thickness is 10 mm or less. In this embodiment, a ceramic antenna is used as the antenna unit 14, so the antenna is very compact.

A plate-shaped metal ground unit 16 is arranged in contact with the lower surface of the antenna unit 14. The leg portion of the ground unit 16 is sandwiched between the radio wave permeating portion 18c and the base portion 18a and is in contact with the metal base portion 18a. Thus, the combination of the ceramic antenna unit 14, the small check valve 17 capable of withstanding high pressure (for example, 7 to 8 MPa), and the ground unit 16 greatly contributes to making the detector 11 compact.

The pressure sensor unit 15 detects the pressure P in the pressure holding chamber 20b. The pressure sensor unit 15 is connected to the IC tag 12 (IC chip 13). The size of the pressure sensor unit 15 is about the same as that of the IC chip 13.

When the transmission radio wave W1 is transmitted from the radio transmitter 21a, the return radio wave W2 is transmitted from the IC tag 12 in accordance with the transmission radio wave W1, and the return radio wave W2 is received by the radio wave receiver 21b.

In other words, the IC tag 12 and the communication device 21 form a radio frequency identification (RFID) system. The frequencies and outputs of the radio waves W1 and W2 to be communicated are appropriately set; however, since a passive type IC tag 12 is used, the communication distance of the radio waves W1 and W2 between the IC tag 12 and the communication device 21 is, for example, no less than about 10 cm and no more than several m.

In the present invention, the return radio wave W2 is used to send the detected pressure data of the pressure holding chamber 20b detected by the pressure sensor unit 15 to the radio wave receiver 21b. The detected pressure data received by the radio wave receiver 21b is inputted to the calculation unit 21c.

The calculation unit 21c stores a reference value Pc of the pressure P in the pressure holding chamber 20b for determining whether or not the fluid L is leaking from the flow path 1a. When the reference value Pc is too low, even when fluid L is not leaking, it is likely to be erroneously detected as leaking. When the reference value Pc is too high, even when fluid L is leaking, it is likely to be erroneously detected as not leaking. Therefore, an appropriate range of the reference value Pc is determined in advance by conducting experiments and simulations in consideration of the specifications and use conditions, and the reference value Pc is set within this appropriate range and stored in the calculation unit 21c.

In this embodiment, the IC chip 13 stores position identifying information for identifying the installation position of the IC tag 12 on the marine hose 1. Then, the position identifying information is transmitted to the radio wave receiver 21b by the return radio wave W2. Other information may be stored in the IC chip 13 and transmitted by the return radio wave W2. For example, information such as the specification information and the manufacturing information of the marine hose 1, the installation time of the IC tag 12 on the marine hose 1, or the like is stored in the IC chip 13, and the information is transmitted to the radio wave receiver 21b.

Hereinafter, an example of a procedure for determining whether or not the fluid L is leaking from the flow path 1a using this detection system will be described.

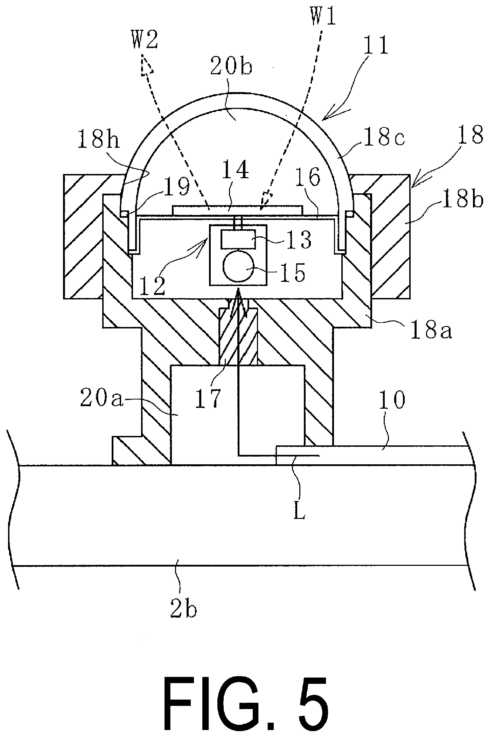

Using a work boat or the like, a worker periodically or when necessary approaches the marine hose 1 and performs work to confirm whether there is leakage of the fluid L. Then, as illustrated in FIG. 5, the communication unit 21 is operated to transmit a transmission radio wave W1 from the radio transmitter 21a toward the detector 11, and electric power is generated in the IC tag 12 using the transmission radio wave W1. The IC tag 12 transmits a return radio wave W2 by the electric power, and the radio wave receiver 21b receives the return radio wave W2. At this time, the detected pressure data detected by the pressure sensor unit 15 is sent by the return radio wave W2, and the detected pressure data received by the radio wave receiver 21b is inputted to the calculation unit 21c. The communication unit 21 may also be configured to display the pressure value of the received detected pressure data.

The calculation unit 21c compares the pressure value of the inputted detected pressure data with the reference value Pc.

When the fluid L does not flow into the fluid retention layer 7, there is no particularly large fluctuation in the pressure P of the pressure holding chamber 20b, so the pressure value of the detected pressure data is smaller than the reference value Pc. Therefore, the calculation unit 21c determines that the fluid L is not leaking from the flow path 1a, and notifies the result by a monitor display or a sound.

On the other hand, when the inner surface rubber 3 and the inner peripheral side reinforcing layer 4 are damaged, the fluid L flows into the fluid retention layer 7 from the flow path 1a, and as this happens, the fluid L flows through the communication pipe 10, the introduction chamber 20a and the check valve 17, and the pressure P in the pressure holding chamber 20b increases. The increased pressure P is held by the check valve 17 and detected by the pressure sensor unit 15. Therefore, when the transmission radio wave W1 is transmitted from the radio wave transmitter 21a to the detector 11 during the leakage confirmation work of the fluid L, the maximum pressure value of the pressure P up to that time is received by the radio wave receiver 12b as detected pressure data detected by the pressure sensor unit 15 and inputted to the calculation unit 21c.

The calculation unit 21c compares the pressure value of the inputted detected pressure data with the reference value Pc. As a result, when the pressure value of the detected pressure data is equal to or higher than the reference value Pc, it is determined that the fluid L is leaking from the flow path 1a, and the result is notified by a monitor display or a sound. When the pressure value of the detected pressure data is less than the reference value Pc, it is determined that the fluid L is not leaking from the flow path 1a, and the result is notified by a monitor display or a sound. In this way, it is possible to determine whether or not the fluid L is leaking based on the detected pressure data (the size of the detected pressure) received by the radio wave receiver 21b.

When the fluid L flowing through the flow path 1a is water and the water leaks and flows into the pressure holding chamber 20b submerging the IC tag 12 (antenna section 14), the radio wave communication between the radio wave transmitter 20a and the IC tag 12 is cut off. Therefore, even though the transmission radio wave W1 is transmitted from the radio wave transmitter 20a, the detected pressure data received by the radio wave receiver 21b becomes zero (the detected pressure data cannot be received). Therefore, when the fluid L is water, for example, and the return radio wave W2 cannot be received even though the transmission radio wave W1 is transmitted, a setting is performed so as to determine that the fluid L is leaking from the flow path 1a. Note that even when the IC tag 12 (antenna section 14) is immersed in oil, the radio wave communication between the radio wave transmitter 20a and the IC tag 12 is not interrupted; however, in a case where the type of the fluid L for interrupting the radio communication is known in advance, and the fluid is the fluid L for interrupting the communication, a setting is performed so as to determine whether or not there is a leak as in the case of water.

As described above, since this detection system uses a passive type IC tag 12, the work of monitoring the status of the battery life becomes unnecessary. Moreover, the pressure in the pressure holding chamber 20b is held by using the check valve 17, and the detected pressure data detected by the pressure sensor unit 15 and received by the radio wave receiver 21b is used as an index, whereby it becomes possible to more reliably determine whether the fluid L leaks from the flow path 1a.

In other words, since a passive type IC tag 12 is used, the detected pressure data detected by the pressure sensor unit 15 cannot be sequentially determined; however, the maximum pressure P in the pressure holding chamber 20b generated before the work of confirming fluid leakage is performed may be determined. When the fluid L leaks from the flow path 1a, there is an excessively large value in the history of the pressure P. Even when the fluid L leaks, the fluid L, for example, may flow out from the fluid retention layer 7 and the pressure P at the time of confirmation work may decrease. Even in such a case, it is possible to reliably determine the presence or absence of the leakage of the fluid L, even though the detection system uses a passive IC tag 12.

In this embodiment, the calculator 21c automatically determines whether or not there is leakage of the fluid L from the flow path 1a. In addition, for example, the operator may determine whether or not the fluid L leaks by comparing the preset reference value Pc with the pressure value of the detected pressure data received by the radio wave receiver 21b.

The operator may perform the work of confirming fluid leakage by holding a handy type communication unit 21 or by mounting the communication unit 21 on a drone. Using a drone eliminates the need for the operator to approach the marine hose 1 for performing the confirmation work.

In this embodiment, the radio wave permeating portion 18c fitted in the through hole 18h is fixed to the base portion 18a by the metal fixed cap portion 18b screwed to the metal base portion 18a fixed to the surface of the hose. Therefore, even when a radio wave permeating portion 18c made of resin is used, the pressure P may be maintained even when the pressure P in the holding chamber 20b becomes excessive.

By arranging the ground unit 16 so as to be in contact with the lower surface of the antenna unit 14, it becomes easy to increase the radio wave intensity of the return radio wave W2 to be transmitted. Furthermore, by bringing the ground unit 16 into contact with the base portion 18a as in this embodiment, the metal portion of the casing 18 may also function as the antenna unit 14. This is also advantageous for performing stable communication between the communication unit 21 and the detector 11.

For a marine hose equipped with a conventional oil pod, the detection system of the present invention may be constructed by preparing the IC tag 12, the pressure sensor unit 15, the check valve 17, the communication unit 21, and the like. Therefore, the marine hose itself may be used as is without modification.

In this embodiment, the return radio wave W2 transmitted from the IC tag 12 transmits position identifying information for identifying the installation position of the IC tag on the marine hose 1. Therefore, by analyzing the return radio wave W2 (position identifying information) received by the radio wave receiver 21b, it becomes easier to more reliably identify the position where the fluid L is leaking.

Note that a known oil pod installed on the outer peripheral surface of the nipple 2b for detecting the fluid L flowing into the fluid retention layer 7 may be used in combination with the above-described detection system. For example, the detection system of the present invention is applied to one end of the marine hose 1 in the longitudinal direction, and a known oil pod is installed on the other end in the longitudinal direction.

A configuration similar to that of the detection system of the present invention is applicable not only to the detection of fluid leaks in marine hoses but also to the detection of fluid leaks in other hoses and pipes.

### Reference Signs List

1 Marine hose
1a Flow path
2 Connecting end portion
1a Flange
2b Nipple
2c Fixing ring
3 Inner surface rubber layer
4 Inner peripheral side reinforcing layer
4a Nipple wire
5 Body wire layer
5a Nipple wire
6 Outer peripheral reinforcing layer
6a Nipple wire
7 Fluid retention layer
8 Buoyant layer
9 Outer covering
10 Communication pipe
11 Detector
12 IC tag
13 IC chip
14 Antenna unit
15 Pressure sensor unit
16 Ground unit
17 Check valve
18 Casing
18a Base portion
18b Fixed cap portion
18c Radio wave permeating portion
18h Through hole
19 Seal member
20a Introduction chamber
20b Pressure holding chamber
21 Communication unit
21a Radio wave transmitter
21b Radio wave receiver
21c Calculation unit

## Claims

1. A marine hose fluid leakage detection system for detecting leakage of fluid flowing through a flow path of a marine hose, the marine hose comprising an inner peripheral side reinforcing layer and an outer peripheral side reinforcing layer laminated on an outer peripheral side of the flow path, a fluid retention layer interposed between the inner peripheral side reinforcing layer and the outer peripheral side reinforcing layer, and a buoyant layer laminated on an outer peripheral side of the fluid retention layer, the marine hose fluid leakage detection system comprising:
a communication pipe communicating with the fluid retention layer and extending to a hose surface;
a detector comprising a casing that is disposed on the hose surface and that communicates with the communication pipe; and
a radio wave transmitter and a radio wave receiver arranged outside the marine hose,
the detector comprising:
a pressure holding chamber;
a check valve that is interposed between the communication pipe and the pressure holding chamber and that allows only a flow from the communication pipe side to the pressure holding chamber side;
a pressure sensor unit housed in the pressure holding chamber; and
a passive type IC tag connected to the pressure sensor unit,
a return radio wave being transmitted from the IC tag in accordance with a transmission radio wave transmitted from the radio wave transmitter,
detected pressure data detected by the pressure sensor unit being transmitted by the return radio wave and received by the radio wave receiver, and
whether there is leakage of the fluid being determined based on the detected pressure data received by the radio wave receiver.

2. The marine hose fluid leakage detection system according to claim 1, wherein
the casing comprises:
a base portion made of metal and having a cylindrical shape, the base portion being fixed to the hose surface;
a fixed cap portion made of metal and comprising a through hole extending vertically, the fixed cap portion being screwed to the base portion; and
a radio wave permeating portion made of resin that, in a state of being fitted into the through hole, is fixed to the base portion by the fixed cap portion screwed to the base portion.

3. The marine hose fluid leakage detection system according to claim 2, wherein
the radio wave permeating portion has a dome shape projecting upward from the through hole.

4. The marine hose fluid leakage detection system according to any one of claims 1 to 3, comprising
a ground unit made of metal and having a plate-like shape disposed in contact with a lower surface of an antenna unit of the IC tag.

5. The marine hose fluid leakage detection system according to claim 4, wherein
the ground unit is brought into contact with a metal portion of the casing.

6. The marine hose fluid leakage detection system according to any one of claims 1 to 5, wherein
the antenna unit of the IC tag is a ceramic antenna.
